# EUROPEAN PATENT APPLICATION

(11) **EP 2 269 454 A1**
(43) Date of publication of application: **05.01.2011**
(21) Application number: 09163602.7
(22) Date of filing: 24.06.2009
(51) Int. Cl.: A01N 43/653, A01N 63/04, A01P 3/00

(54) **Combinations of fungicidally active yeast and fungicides**

(71) Applicant: Bayer CropScience AG, 40789 Monheim (DE)
(72) Inventor: The designation of the inventor has not yet been filed

(57) **Abstract**

Compositions are provided that improve overall plant vigor and yield by combining agriculturally effective amounts of at least one environmentally friendly biological control agent and at least one chemical fungicide. A composition of the present invention is particularly effective in the presence of fungal species. Use of a composition of the present invention leads to an overall reduction in crop losses caused by fungi and this reduction is much greater than would have been expected from application of either component alone. Methods for utilizing compositions of the present invention are also provided. Further the compositions according to this invention display synergistic insecticidal and/or fungicidal activity.

## Description

The present invention generally relates to compositions and methods for reducing overall damage of plants and plant parts as well as losses in harvested fruits or vegetables caused by plant pathogenic fungi or other unwanted micro-organisms. Particularly it relates to compositions and methods for protecting fruits and vegetables during the growth phase, around harvesting and after harvesting.

The yeast Metschnikowia fructicola, in particular the strain NRRL Y-30752, is known from US 6,994,849 B2. This yeast provides a good protection of plants and plant parts against plant pathogenic fungi. However, the performance of such yeast is still not fully satisfactory under conditions of severe disease pressure.

Surprisingly, it has been found that compositions comprising a) fungicidally active yeast (also in the context of this invention referred to as a biological control agent), particularly Metschnikowia fructicola, very particularly the strain Metschnikowia fructicola NRRL Y-30752, and b) at least one chemical fungicide, display a synergistically enhanced fungicidal activity.

The compositions of the present invention have the advantage of being either formulated into a single, stable composition with an agriculturally acceptable shelf life or being combined at the time of use (e.g., tank-mix).

Further, the compositions according to this invention display surprisingly high degrees of fungicidal activity in the treatment of plants, plant parts or plant propagation material, due to a synergistic effect between the biological control agent and fungicides described in this invention.

Methods of treating a seed and/or plant or plant parts are also provided. The method comprises the steps of (a) providing a composition comprising an effective amount of at least one biological control agent and at least one fungicide and (b) applying the composition to the plant. The present compositions may be applied in any desired manner, such as in the form of a seed coating, soil drench, and/or directly in-furrow and/or as a foliar spray and applied either pre-emergence, post-emergence or both. In other words, the composition can be applied to the seed, the plant or to the fruit of the plant or to the soil wherein the plant is growing or wherein it is desired to grow.

Preferably, the compositions according to this invention are particularly useful in the protection of fruits and vegetables and flowers.

The foregoing and other aspects of the present invention are explained in detail in the detailed description and examples set forth below.

The compositions of the present invention have also been found to provide a greater degree of plant vigor and yield in nematode and/or fungal infested environments than would be expected from application of either the biological control agent or the insect control agent alone. The biological control agent may be supplied in any physiologic state such as active or dormant. Dormant yeast may be supplied for example frozen, dried, or lyophilized.

The biological control agent, in particular Metschnikowia fructicola is biologically effective when delivered at a concentration in excess of 10⁶ cfu/g (colony forming units per gram), preferably in excess of 10⁷ cfu/g, more preferably 10⁸ cfu/g and most preferably 10⁹ cfu/g.

The amount of the at least one biological control agent employed in the compositions can vary depending on the final formulation as well as size or type of the plant or seed utilized. Preferably, the at least one biological control agent in the compositions is present in about 2 % w/w to about 80 % w/w of the entire formulation. More preferably, the at least one biological control agent employed in the compositions is about 5 % w/w to about 65 % w/w and most preferably about 10 % w/w to about 60 % w/w by weight of the entire formulation.

The amount of the at least one fungicide employed in the compositions can vary depending on the final formulation as well as the size of the plant and seed to be treated. Preferably, the at least one fungicide is about 0.1 % w/w to about 80 % w/w based on the entire formulation. More preferably, the fungicide is present in an amount of about 1 % w/w to about 60 % w/w and most preferably about 10 % w/w to about 50 % w/w.

The ratios of the biological control agent to the chemical fungicide(s) used within this invention are as follows: Typically, the ratio of the biological control agent to the chemical fungicide is within the range of 1:100 to 250:1. Preferably, the ratio of the biological control agent to the chemical fungicide is within the range of 1:10 to 100:1. Even more preferred, this ratio is in the range of 1:5 to 50:1. All of these ratios refer to a yeast preparation with a minimum of 10⁶ cfu/g.

The preferred application rate of the biological control agent, in particular the yeast, very particular Metschnikowia fructicola strain NRRL Y-30752 is within the range of 0.5 to 8 Kg/ha.

The compositions according to this invention contain one or more fungicide. These fungicides can be selected from:
(F1) Inhibitors of the nucleic acid synthesis, for example benalaxyl, benalaxyl-M, bupirimate, clozylacon, dimethirimol, ethirimol, furalaxyl, hymexazol, metalaxyl, metalaxyl-M, ofurace, oxadixyl and oxolinic acid.
(F2) Inhibitors of the mitosis and cell division, for example benomyl, chlorfenazole, diethofencarb, ethaboxam, fuberidazole, pencycuron, thiophanate, thiophanate-methyl and zoxamide.
(F3) Inhibitors of the respiration, for example diflumetorim as CI-respiration inhibitor; bixafen, boscalid, carboxin, fenfuram, flutolanil, fluopyram, furametpyr, furmecyclox, isopyrazam (9R-component), isopyrazam (9S-component), mepronil, oxycarboxin, penthiopyrad, thifluzamide as CII-respiration inhibitor; amisulbrom, azoxystrobin, cyazofamid, dimoxystrobin, enestroburin, famoxadone, fenamidone, fluoxastrobin, kresoxim-methyl, metominostrobin, orysastrobin, picoxystrobin, pyraclostrobin, pyribencarb, trifloxystrobin as CIII-respiration inhibitor.
(F4) Compounds capable to act as an uncoupler, like for example binapacryl, dinocap, fluazinam and meptyldinocap.
(F5) Inhibitors of the ATP production, for example fentin acetate, fentin chloride, fentin hydroxide, and silthiofam.
(F6) Inhibitors of the amino acid and/or protein biosynthesis, for example andoprim, blasticidin-S, kasugamycin, kasugamycin hydrochloride hydrate, mepanipyrim and.
(F7) Inhibitors of the signal transduction, for example fenpiclonil, and quinoxyfen.
(F8) Inhibitors of the lipid and membrane synthesis, for example biphenyl, chlozolinate, edifenphos, etridiazole, iodocarb, iprobenfos, isoprothiolane, procymidone, propamocarb, propamocarb hydrochloride, pyrazophos, tolclofos-methyl and vinclozolin.
(F9) Inhibitors of the ergosterol biosynthesis, for example aldimorph, azaconazole, bitertanol, bromuconazole, cyproconazole, diclobutrazole, difenoconazole, diniconazole, diniconazole-M, dodemorph, dodemorph acetate, epoxiconazole, etaconazole, fenarimol, fenbuconazole, fenhexamid, fenpropidin, fenpropimorph, fluquinconazole, flurprimidol, flusilazole, flutriafol, furconazole, furconazole-cis, hexaconazole, imibenconazole, ipconazole, metconazole, myclobutanil, naftifine, nuarimol, oxpoconazole, paclobutrazol, pefurazoate, penconazole, piperalin, prochloraz, propiconazole, prothioconazole, pyributicarb, pyrifenox, quinconazole, simeconazole, spiroxamine, tebuconazole, terbinafine, tetraconazole, triadimefon, triadimenol, tridemorph, triflumizole, triforine, triticonazole, uniconazole, viniconazole and voriconazole.
(F10) Inhibitors of the cell wall synthesis, for example benthiavalicarb, dimethomorph, flumorph, iprovalicarb, mandipropamid, polyoxins, polyoxorim, prothiocarb, validamycin A, and valiphenal.
(F11) Inhibitors of the melanine biosynthesis, for example carpropamid, diclocymet, fenoxanil, phthalide, pyroquilon and tricyclazole.
(F12) Compounds capable to induce a host defence, like for example acibenzolar-S-methyl, probenazole, and tiadinil.
(F13) Compounds capable to have a multisite action, like for example bordeaux mixture, captafol, captan, chlorothalonil, copper naphthenate, copper oxide, copper oxychloride, copper preparations such as copper hydroxide, copper sulphate, dichlofluanid, dithianon, dodine, dodine free base, ferbam, fluorofolpet, folpet, guazatine, guazatine acetate, iminoctadine, iminoctadine albesilate, iminoctadine triacetate, mancopper, mancozeb, maneb, metiram, metiram zinc, oxine-copper, propamidine, propineb, sulphur and sulphur preparations including calcium polysulphide, thiram, tolylfluanid, zineb and ziram.
(F14) Further compounds like for example 2,3-dibutyl-6-chlorothieno[2,3-d]pyrimidin-4(3H)-one, ethyl (2Z)-3-amino-2-cyano-3-phenylprop-2-enoate, pyflufen (N-[2-(1,3-dimethylbutyl)phenyl]-5-fluoro-1,3-dimethyl-1H-pyrazole-4-carboxamide), N-{2-[1,1'-bi(cyclopropyl)-2-yl]phenyl}-3-(difluoromethyl)-1-methyl-1H-pyrazole-4-carboxamide, 3-(difluoromethyl)-1-methyl-N-(3',4',5'-trifluorobiphenyl-2-yl)-1H-pyrazole-4-carboxamide, 3-(difluoromethyl)-N-[4-fluoro-2-(1,1,2,3,3,3-hexafluoropropoxy)phenyl]-1-methyl-1H-pyrazole-4-carboxamide, (2E)-2-(2-{[6-(3-chloro-2-methylphenoxy)-5-fluoropyrimidin-4-yl]oxy}phenyl)-2-(methoxyimino)-N-methylethanamide, (2E)-2-{2-[({[(2E,3E)-4-(2,6-dichlorophenyl)but-3-en-2-ylidene]amino}oxy)methyl]phenyl}-2-(methoxyimino)-N-methylethanamide, 2-chloro-N-(1,1,3-trimethyl-2,3-dihydro-1H-inden-4-yl)pyridine-3-carboxamide, N-(3-ethyl-3,5,5-trimethylcyclohexyl)-3-(formylamino)-2-hydroxybenzamide, 5-methoxy-2-methyl-4-(2-{[({(1E)-1-[3-(trifluoromethyl) phenyl]ethylidene} amino)oxy]methyl}phenyl)-2,4-dihydro-3H-1,2,4-triazol-3-one, (2E)-2-(methoxyimino)-N-methyl-2-(2-{[({(1E)-1-[3-(trifluoromethyl)phenyl]ethylidene}amino)oxy]methyl}phenyl)ethanamide, (2E)-2-(methoxyimino)-N-methyl-2-{2-[(E)-({1-[3-(trifluoromethyl)phenyl]ethoxy}imino) methyl]phenyl}ethanamide, (2E)-2-{2-[({[(1E)-1-(3-{[(E)-1-fluoro-2-phenylethenyl]oxy}phenyl)ethylidene]amino}oxy)methyl]phenyl}-2-(methoxyimino)-N-methylethanamide, 1-(4-chlorophenyl)-2-(1H-1,2,4-triazol-1-yl)cycloheptanol, methyl 1-(2,2-dimethyl-2,3-dihydro-1H-inden-1-yl)-1H-imidazole-5-carboxylate, N-ethyl-N-methyl-N'-{2-methyl-5-(trifluoromethyl)-4-[3-(trimethylsilyl)propoxy]phenyl}imidoformamide, N'-{5-(difluoromethyl)-2-methyl-4-[3-(trimethylsilyl)propoxy]phenyl}-N-ethyl-N-methylimidoformamide, O-{1-[(4-methoxyphenoxy)methyl]-2,2-dimethylpropyl} 1H-imidazole-1-carbothioate, N-[2-(4-{[3-(4-chlorophenyl)prop-2-yn-1-yl]oxy}-3-methoxyphenyl)ethyl]-N²-(methylsulfonyl)valinamide, 5-chloro-7-(4-methylpiperidin-1-yl)-6-(2,4,6-trifluorophenyl)[1,2,4]triazolo[1,5-a]pyrimidine, 5-amino-1,3,4-thiadiazole-2-thiol, propamocarb-fosetyl, 1-[(4-methoxyphenoxy)methyl]-2,2-dimethylpropyl 1H-imidazole-1-carboxylate, 1-methyl-N-[2-(1,1,2,2-tetrafluoroethoxy)phenyl]-3-(trifluoromethyl)-1H-pyrazole-4-carboxa"de, 2,3,5,6-tetrachloro-4-(methylsulfonyl)pyridine, 2-butoxy-6-iodo-3-propyl-4H-chromen-4-one, 2-phenylphenol and salts, 3-(difluoromethyl)-1-methyl-N-[2-(1,1,2,2-tetrafluoroethoxy)phenyl]-1H-pyrazole-4-carboxamide, 3,4,5-trichloropyridine-2,6-dicarbonitrile, 3-[5-(4-chlorophenyl)-2,3-dimethylisoxazolidin-3-yl]pyridine, 3-chloro-5-(4-chlorophenyl)-4-(2,6-difluorophenyl)-6-methylpyridazine, 4-(4-chlorophenyl)-5-(2,6-difluorophenyl)-3,6-dimethylpyridazine, quinolin-8-ol, quinolin-8-ol sulfate (2:1) (salt), 5-methyl-6-octyl-3,7-dihydro[1,2,4]triazolo[1,5-a]pyrimidin-7-amine, 5-ethyl-6-octyl-3,7-dihydro[1,2,4]triazolo[1,5-a]pyrimidin-7-amine, benthiazole, bethoxazin, capsimycin, carvone, chinomethionat, chloroneb, cufraneb, cyflufenamid, cymoxanil, cyprosulfamide, dazomet, debacarb, dichlorophen, diclomezine, dicloran, difenzoquat, difenzoquat methylsulphate, diphenylamine, ecomate, ferimzone, flumetover, fluopicolide, fluoroimide, flusulfamide, flutianil, fosetyl-aluminium, fosetyl-calcium, fosetyl-sodium, hexachlorobenzene, irumamycin, isotianil, methasulfocarb, methyl (2E)-2-{2-[({cyclopropyl[(4-methoxyphenyl)imino]methyl}thio)methyl]phenyl}-3-methoxyacrylate, methyl isothiocyanate, metrafenone, (5-bromo-2-methoxy-4-methylpyridin-3-yl)(2,3,4-trimethoxy-6-methylphenyl)-methanone, mildiomycin, tolnifanide, N-(4-chlorobenzyl)-3-[3-methoxy-4-(prop-2-yn-1-yloxy)phenyl]propanamide, N-[(4-chlorophenyl)(cyano)methyl]-3-[3-methoxy-4-(prop-2-yn-1-yloxy)phenyl]propanamide, N-[(5-bromo-3-chloropyridin-2-yl)methyl]-2,4-dichloropyridine-3-carboxamide, N-[1-(5-bromo-3-chloropyridin-2-yl)ethyl]-2,4-dichloropyridine-3-carboxamide, N-[1-(5-bromo-3-chloropyridin-2-yl)ethyl]-2-fluoro-4-iodopyridine-3-carboxamide, N-{(Z)-[(cyclo-propylmethoxy)imino][6-(difluoromethoxy)-2,3-difluorophenyl]methyl}-2-phenylacetamide, N-{(E)-[(cyclopropylmethoxy)imino][6-(difluoromethoxy)-2,3-difluorophenyl]methyl}-2-phenylacetamide, natamycin, nickel dimethyldithiocarbamate, nitrothal-isopropyl, octhilinone, oxamocarb, oxyfenthiin, pentachlorophenol and salts, phenazine-1-carboxylic acid, phenothrin, phosphorous acid and its salts, propamocarb fosetylate, propanosine-sodium, proquinazid, pyrrolnitrine, quintozene, S-prop-2-en-1-yl 5-amino-2-(1-methylethyl)-4-(2-methylphenyl)-3-oxo-2,3-dihydro-1H-pyrazole-1-carbothioate, tecloftalam, tecnazene, triazoxide, trichlamide, 5-chloro-N'-phenyl-N'-prop-2-yn-1-ylthiophene-2-sulfonohydrazide and zarilamid.

In a preferred embodiment, the fungicide is selected from the following list:
metalaxyl, metalaxyl-M, boscalid, fluopyram, bixafen, penthiopyrad, azoxystrobin, famoxadone, fenamidone, kresoxim-methyl, pyraclostrobin, trifloxystrobin.

Preferred compositions according to the invention comprise a biological control agent, which is Metschnikowia fructicola, in particular the strain NRRL Y-30752 and at least one fungicidal control agent selected from the list (F1) to (F14).

Especially preferred compositions according to the invention comprise a biological control agent, which is Metschnikowia fructicola, in particular the strain NRRL Y-30752 and at least one fungicidal control agent selected from the list : metalaxyl, metalaxyl-M, boscalid, fluopyram, bixafen, penthiopyrad, azoxystrobin, famoxadone, fenamidone, kresoxim-methyl, pyraclostrobin, trifloxystrobin.

Further particularly preferred compositions are those of table (I):

**Table (I)**

| **Biological control agent** | **Fungicide group** | **Ratio of biological control agent to chemical fungicide** | **Preferred ratio of biological control agent to chemical fungicide** |
|---|---|---|---|
| Metschnikowia fructicola strain NRRL Y-30752 | (F1) | 1:100 - 250:1 | 1:10 - 100:1 |
| Metschnikowia fructicola strain NRRL Y-30752 | (F2) | 1:100 - 250:1 | 1:10 - 100:1 |
| Metschnikowia fructicola strain NRRL Y-30752 | (F3) | 1:100 - 250:1 | 1:10 - 100:1 |
| Metschnikowia fructicola strain NRRL Y-30752 | (F4) | 1:100 - 250:1 | 1:10 - 100:1 |
| Metschnikowia fructicola strain NRRL Y-30752 | (F5) | 1:100 - 250:1 | 1:10 - 100:1 |
| Metschnikowia fructicola strain NRRL Y-30752 | (F6) | 1:100 - 250:1 | 1:10 - 100:1 |
| Metschnikowia fructicola strain NRRL Y-30752 | (F7) | 1:100 - 250:1 | 1:10 - 100:1 |
| Metschnikowia fructicola strain NRRL Y-30752 | (F8) | 1:100 - 250:1 | 1:10 - 100:1 |
| Metschnikowia fructicola strain NRRL Y-30752 | (F9) | 1:100 - 250:1 | 1:10 - 100:1 |
| Metschnikowia fructicola strain NRRL Y-30752 | (F10) | 1:100 - 250:1 | 1:10 - 100:1 |
| Metschnikowia fructicola strain NRRL Y-30752 | (F11) | 1:100 - 250:1 | 1:10 - 100:1 |
| Metschnikowia fructicola strain NRRL Y-30752 | (F12) | 1:100 - 250:1 | 1:10 - 100:1 |
| Metschnikowia fructicola strain NRRL Y-30752 | (F13) | 1:100 - 250:1 | 1:10 - 100:1 |
| Metschnikowia fructicola strain NRRL Y-30752 | (F14) | 1:100 - 250:1 | 1:10 - 100:1 |

Most preferred are compositions according to table (II)

**Table (II)**

| **Biological control agent (application rate)** | **Chemical fungicide (application rate)** | **Ratio of Biological control agent to chemical fungicide** |
|---|---|---|
| Metschnikowia fructicola strain NRRL Y-30752 (0.5 - 8 Kg/ha) | Metalaxyl (0.5 - 5) | 1:10 - 16:1 |
| Metschnikowia fructicola strain NRRL Y-30752 (0.5 - 8 Kg/ha) | Metalaxyl-M (0.5 - 5) | 1:10 - 16:1 |
| Metschnikowia fructicola strain NRRL Y-30752 (0.5 - 8 Kg/ha) | Boscalid (0.5 - 2) | 1:4 - 16:1 |
| Metschnikowia fructicola strain NRRL Y-30752 (0.5 - 8 Kg/ha) | Fluopyram (0.25- 1) | 1:2 - 32:1 |
| Metschnikowia fructicola strain NRRL Y-30752 (0.5 - 8 Kg/ha) | Bixafen (0.25- 1) | 1:2 - 32:1 |
| Metschnikowia fructicola strain NRRL Y-30752 (0.5 - 8 Kg/ha) | Penthiopyrad (0.25- 1) | 1:2 - 32:1 |
| Metschnikowia fructicola strain NRRL Y-30752 (0.5 - 8 Kg/ha) | Azoxystrobin (0.25- 1) | 1:2 - 32:1 |
| Metschnikowia fructicola strain NRRL Y-30752 (0.5 - 8 Kg/ha) | Famoxadone (0.25- 1) | 1:2 - 32:1 |
| Metschnikowia fructicola strain NRRL Y-30752 (0.5 - 8 Kg/ha) | Fenamidone (0.25- 1) | 1:2 - 32:1 |
| Metschnikowia fructicola strain NRRL Y-30752 (0.5 - 8 Kg/ha) | Kresoxim-methyl (0.1 -1) | 1:2 - 80:1 |
| Metschnikowia fructicola strain NRRL Y-30752 (0.5 - 8 Kg/ha) | Pyraclostrobin (0.1 - 1) | 1:2 - 80:1 |
| Metschnikowia fructicola strain NRRL Y-30752 (0.5 - 8 Kg/ha) | Trifloxystrobin (0,1 - 1) | 1:2 - 80:1 |

According to further features in preferred embodiments of the invention described below, there is provided a composition comprising a biologically pure strain of Metschnikowia fructicola /having all of the identifying characteristics of the biologically pure culture of NRRL Y-30752.

According to still further features in the described preferred embodiments there is provided a composition comprising biologically pure mutant of Metschnikowia fructicola, having all of the identifying characteristics of the biologically pure culture of NRRL Y-30752.

According to still further features in the described preferred embodiments the deleterious microorganism is selected from the group consisting of /Botrytis cinerea, Aspergillus niger, Penicillium digitatum, Penicillium expansum, Rhizopus stolonifer Alternaria /spp., /Molinilia /spp. and /Fusarium /spp.

According to still further features in the described preferred embodiments the yeast is supplied in a physiologic state selected from the group consisting of active and dormant.

According to still further features in the described preferred embodiments the yeast of the genus /Metschnikowia /has all of the identifying characteristics of the species /Metschnikowia fructicola /identified as NRRL Y-30752 or of any strain thereof or of any mutant of such a strain.

Particularly preferred is the treatment of pome and stone fruit and berries, in particular apples, pears, plums, peaches, almonds, cherries, strawberries, raspberries and blackberries.

Particularly preferred is the treatment of citrus fruit, in particular orange, lemon, grapefruit, mandarin. Particularly preferred is the treatment of tropical fruit, in particular papaya, passion fruit, mango, carambola, pineapple, banana.

Particularly preferred is the treatment of grapevines.

Further preferred is the treatment of vegetables, in particular: Melons, Cucurbits, lettuce, potatoes Further preferred is the treatment of flowers, bulbs, pot plants, trees

Besides the application of the compositions according to the invention on growing plants or plant parts, they can also be used to protect plants or plant parts after harvesting.

Within this application "post-harvest treatment" is to be understood in a very broad sense. On the one hand it means literally the treatment of fruit or vegetables after the fruit and vegetables have been harvested. For post-harvest treatment the fruit or vegetable is treated with (e.g. with using the method and apparatus disclosed in WO 2005/009474), dipped or tank dumped or drenched into a liquid, brushed with, fumigated, painted, fogged (warm or cold), or the fruit may be coated with a waxy or other composition.

According to the invention, post-harvest and storage diseases may be caused for example by the following fungi:
Colletotrichum spp., e.g. Colletotrichum musae, Colletotrichum gloeosporioides, Colletotrichum coccodes; Fusarium spp., e.g. Fusarium semitectum, Fusarium moniliforme, Fusarium solani, Fusarium oxysporum; Verticillium spp., e.g. Verticillium theobromae; Nigrospora spp.; Botrytis spp., e.g. Botrytis cinerea; Geotrichum spp., e.g. Geotrichum candidum; Phomopsis spp., Phomopsis natalensis; Diplodia spp., e.g. Diplodia citri; Alternaria spp., e.g. Alternaria citri, Alternaria alternata; Phytophthora spp., e.g. Phytophthora citrophthora, Phytophthora fragariae, Phytophthora cactorum, Phytophthora parasitica; Septoria spp., e.g. Septoria depressa; Mucor spp., e.g. Mucor piriformis; Monilinia spp., e.g. Monilinia fructigena, Monilinia laxa; Venturia spp., e.g. Venturia inaequalis, Venturia pyrina; Rhizopus spp., e.g. Rhizopus stolonifer, Rhizopus oryzae; Glomerella spp., e.g. Glomerella cingulata; Sclerotinia spp., e.g. Sclerotinia fruiticola; Ceratocystis spp., e.g. Ceratocystis paradoxa; Penicillium spp., e.g. Penicillium funiculosum, Penicillium expansum, Penicillium digitatum, Penicillium italicum; Gloeosporium spp., e.g. Gloeosporium album, Gloeosporium perennans, Gloeosporium fructigenum, Gloeosporium singulata; Phlyctaena spp., e.g. Phlyctaena vagabunda; Cylindrocarpon spp., e.g. Cylindrocarpon mali; Stemphyllium spp., e.g. Stemphyllium vesicarium; Phacydiopycnis spp., e.g. Phacydiopycnis malirum; Thielaviopsis spp., e.g. Thielaviopsis paradoxy; Aspergillus spp., e.g. Aspergillus niger, Aspergillus carbonarius; Nectria spp., e.g. Nectria galligena; Pezicula spp.

According to the invention, post-harvest storage disorders are for example scald, scorch, softening, senescent breakdown, lenticel spots, bitter pit, browning, water core, vascular breakdown, CO₂ injury, CO₂ deficiency and O₂ deficiency.

Fruit, cutflower and vegetables to be treated according to the invention are particularly selected from
cereals, e.g. wheat, barley, rye, oats, rice, sorghum and the like; beets, e.g. sugar beet and fodder beet; pome and stone fruit and berries, e.g. apples, pears, plums, peaches, almonds, cherries, strawberries, raspberries and blackberries; leguminous plants, e.g. beans, lentils, peas, soy beans; oleaginous plants, e.g. rape, mustard, poppy, olive, sunflower, coconut, castor-oil plant, cocoa, ground-nuts; cucurbitaceae, e.g. pumpkins, gherkins, melons, cucumbers, squashes; fibrous plants, e.g. cotton, flax, hemp, jute; citrus fruit, e.g. orange, lemon, grapefruit, mandarin; tropical fruit, e.g. papaya, passion fruit, mango, carambola, pineapple, banana; vegetables, e.g. spinach, lettuce, asparagus, brassicaceae such as cabbages and turnips, carrots, onions, tomatoes, potatoes, hot and sweet peppers; laurel-like plants, e.g. avocado, cinnamon, camphor tree; or plants such as maize, tobacco, nuts, coffee, sugar-cane, tea, grapevines, hops, rubber plants, as well as ornamental plants, e.g. cutflowers, roses, gerbera and flower bulbs, shrubs, deciduous trees and evergreen trees such as conifers. This enumeration of culture plants is given with the purpose of illustrating the invention and not to delimiting it thereto.

In another preferred embodiment of the invention, the treatment of plants or plant parts is carried out in two steps:
a) with a chemical fungicide, and
b) with a yeast,
wherein the time interval between the two applications a) and b) is defined as follows:

| **Crop** | **Application time of chemical fungicide** | **Application time of yeast** |
|---|---|---|
| stone fruit and strawberries | 60 to 7 days before harvest | 14 to 1 day before harvest |
| Pome | 100 - 14 days before harvest | 14 - 1 day before harvest |

In all cases the chemical fungicide would be applied at a plant growth stage (BBCH) of 50 - 85 and the yeast would be applied at plant growth stage (BBCH) of 80 onward including post harvest.

The chemical fungicide in step a) is preferably selected from:
Fenhexamid, Tebuconazole, fluquinconazole, triadimenol, Triadimefon, difenconazole, epoxyconazole, penconazole, bitertanol, propiconazole, myclobutanil, imazalil, prochloraz, spiroxamine, tridemorph, fenpropimorph, fenpropidin, trifloxystrobin, azoxystrobin, kresoxymmetyl, pyraclostrobin, fenamidone, fenoxadone, pyrimethanil, cyprodinil, mepanipyrim, dicarboxamides, iprodione, propineb, mancozeb, fosetyl-aluminium, dimethomorph, fluazinam, iprovalicarb, carbendazim, thiophanate methyl, thiabendazole , fluopicolide, metalaxyl, metalaxyl-M, fluopyram, bixafen, boscalid, isopyrazam, penthopyrad, dithiocarbamate.

Particularly preferred chemical fungicide for step a) are:fluopyram, tebuconazole, fenhexamid, trifloxystrobin

The most preferred chemical fungicides for carrying out step a) of this embodiment is fluopyram or tebuconazole.

The yeast of step b) preferably is a yeast that is able to colonize the plant or plant part. Particularly preferred are yeasts of the species Metschnikowia fructicola, and very particularly preferred are yeasts of the strain Metschnikowia fructicola NRRL Y-30752.

Most preferably, step a) is carried out with fluopyram or tebuconazole and step b) is carried out with Metschnikowia fructicola NRRL Y-30752.

BBCH refers to the growth stage of the plant and is described in: "Growth stages of mono-and dicotyledonous plants", BBCH Monograph, 2nd Edition, 2001, Uwe Meier Ed., Federal Biological Research Centre for Agriculture and Forestry

Surprisingly, this method achieves a very high level of control of plants or plant parts against unwanted microorganisms. In comparison to treatments of the state of the art, which either use only chemical fungicides or only biological fungicides, this methods combines a high level of control of unwanted microorganisms with very low levels of residues of the chemical fungicides on the treated plants or plant parts.

The present invention also provides methods of treating a plant by application of any of a variety of customary formulations in an effective amount to either the soil (i.e., in-furrow), a portion of the plant (i.e., drench) or on the seed before planting (i.e., seed coating or dressing). Customary formulations include solutions (SL), emulsifiable concentrate (EC), wettable powders (WP), suspension concentrate (SC and FS), wettable powder (WP), soluble powders (SP), granules (GR), suspension-emulsion concentrate (SE), natural and synthetic materials impregnated with active compound, and very fine control release (CR) capsules in polymeric substances. In one embodiment, the insect control agent and biological control agent are formulated in powders that are available in either a ready-to-use formulation or are mixed together at the time of use. In either embodiment, the powder may be admixed with the soil prior to or at the time of planting. In an alternative embodiment, one or both of either the biological control agent or insect control agent is a liquid formulation that is mixed together at the time of treating. One of ordinary skill in the art understands that an effective amount of the inventive compositions depends on the final formulation of the composition as well as the size of the plant or the size of the seed to be treated.

Depending on the final formulation and method of application, one or more suitable additives can also be introduced to the present compositions. Adhesives such as carboxymethylcellulose and natural and synthetic polymers in the form of powders, granules or latexes, such as gum arabic, chitin, polyvinyl alcohol and polyvinyl acetate, as well as natural phospholipids, such as cephalins and lecithins, and synthetic phospholipids, can be added to the present compositions.

In a preferred embodiment, the compositions are formulated in a single, stable solution, or emulsion, or suspension. For solutions, the active chemical compounds (i.e., the insect control agent) are dissolved in solvents before the biological control agent is added. Suitable liquid solvents include petroleum based aromatics, such as xylene, toluene or alkylnaphthalenes, aliphatic hydrocarbons, such as cyclohexane or paraffins, for example petroleum fractions, mineral and vegetable oils, alcohols, such as butanol or glycol as well as their ethers and esters, ketones, such as methyl ethyl ketone, methyl isobutyl ketone or cyclohexanone, strongly polar solvents, such as dimethylformamide and dimethyl sulphoxide. For emulsion or suspension, the liquid medium is water. In one embodiment, the insect control agent and biological control agent are suspended in separate liquids and mixed at the time of application. In a preferred embodiment of suspension, the insect control agent and biologic are combined in a ready-to-use formulation that exhibits a shelf-life of at least two years. In use, the liquid can be sprayed or atomized foliarly or in-furrow at the time of planting the crop. The liquid composition can be introduced to the soil before germination of the seed or directly to the soil in contact with the roots by utilizing a variety of techniques including, but not limited to, drip irrigation, sprinklers, soil injection or soil drenching.

Optionally, stabilizers and buffers can be added, including alkaline and alkaline earth metal salts and organic acids, such as citric acid and ascorbic acid, inorganic acids, such as hydrochloric acid or sulfuric acid. Biocides can also be added and can include formaldehydes or formaldehyde-releasing agents and derivatives of benzoic acid, such as p-hydroxybenzoic acid.

In one embodiment, the solid or liquid compositions further contain functional agents capable of protecting seeds from the harmful effects of selective herbicides such as activated carbon, nutrients (fertilizers), and other agents capable of improving the germination and quality of the products or a combination thereof.

In a particularly preferred embodiment, the compositions of the present invention are formulated as a seed treatment. The seed treatment comprises at least one insect control agent and at least one biological control agent. According to the present invention, the seeds are substantially uniformly coated with one or more layers of the compositions disclosed herein using conventional methods of mixing, spraying or a combination thereof through the use of treatment application equipment that is specifically designed and manufactured to accurately, safely, and efficiently apply seed treatment products to seeds. Such equipment uses various types of coating technology such as rotary coaters, drum coaters, fluidized bed techniques, spouted beds, rotary mists or a combination thereof. Liquid seed treatments such as those of the present invention can be applied via either a spinning "atomizer" disk or a spray nozzle which evenly distributes the seed treatment onto the seed as it moves though the spray pattern. Preferably, the seed is then mixed or tumbled for an additional period of time to achieve additional treatment distribution and drying. The seeds can be primed or unprimed before coating with the inventive compositions to increase the uniformity of germination and emergence. In an alternative embodiment, a dry powder formulation can be metered onto the moving seed and allowed to mix until completely distributed.

The seeds may be coated via a batch or continuous coating process. In a continuous coating embodiment, continuous flow equipment simultaneously meters both the seed flow and the seed treatment products. A slide gate, cone and orifice, seed wheel, or weighing device (belt or diverter) regulates seed flow. Once the seed flow rate through treating equipment is determined, the flow rate of the seed treatment is calibrated to the seed flow rate in order to deliver the desired dose to the seed as it flows through the seed treating equipment. Additionally, a computer system may monitor the seed input to the coating machine, thereby maintaining a constant flow of the appropriate amount of seed.

In a batch coating embodiment, batch treating equipment weighs out a prescribed amount of seed and places the seed into a closed treating chamber or bowl where the corresponding dose of seed treatment is then applied. This batch is then dumped out of the treating chamber in preparation for the treatment of the next batch. With computer control systems, this batch process is automated enabling it to continuously repeat the batch treating process.

In either embodiment, the seed coating machinery can optionally be operated by a programmable logic controller that allows various equipment to be started and stopped without employee intervention. The components of this system are commercially available through several sources such as Gustafson Equipment of Shakopee, MN.

A variety of additives can be added to the seed treatment formulations comprising the inventive compositions. Binders can be added and include those composed preferably of an adhesive polymer that can be natural or synthetic without phytotoxic effect on the seed to be coated. Any of a variety of colorants may be employed, including organic chromophores classified as nitroso, nitro, azo, including monoazo, bisazo and polyazo, diphenylmethane, triarylmethane, xanthene, methine, acridine, thiazole, thiazine, indamine, indophenol, azine, oxazine, anthraquinone and phthalocyanine. Other additives that can be added include trace nutrients such as salts of iron, manganese, boron, copper, cobalt, molybdenum and zinc. A polymer or other dust control agent can be applied to retain the treatment on the seed surface.

Other conventional seed treatment additives include, but are not limited to, coating agents, wetting agents, buffering agents, and polysaccharides. At least one agriculturally acceptable carrier can be added to the seed treatment formulation such as water, solids or dry powders. The dry powders can be derived from a variety of materials such as calcium carbonate, gypsum, vermiculite, talc, humus, activated charcoal, and various phosphorous compounds.

In one embodiment, the seed coating composition can comprise at least one filler which is an organic or inorganic, natural or synthetic component with which the active components are combined to facilitate its application onto the seed. Preferably, the filler is an inert solid such as clays, natural or synthetic silicates, silica, resins, waxes, solid fertilizers (for example ammonium salts), natural soil minerals, such as kaolins, clays, talc, lime, quartz, attapulgite, montmorillonite, bentonite or diatomaceous earths, or synthetic minerals, such as silica, alumina or silicates, in particular aluminium or magnesium silicates.

Any plant seed capable of germinating to form a plant that is susceptible to attack by nematodes and/or pathogenic fungi can be treated in accordance with the invention. Suitable seeds include those of cole crops, vegetables, fruits, trees, fiber crops, oil crops, tuber crops, coffee, flowers, legume, cereals, as well as other plants of the monocotyledonus, and dicotyledonous species. Preferably, crop seeds are be coated which include, but are not limited to, soybean, peanut, tobacco, grasses, wheat, barley, rye, sorghum, rice, rapeseed, sugarbeet, sunflower, tomato, pepper, bean, lettuce, potato, and carrot seeds. Most preferably, cotton or corn (sweet, field, seed, or popcorn) seeds are coated with the present compositions.

The compositions in accordance with the present invention exhibit unexpectedly improved overall plant vigor and yield by combining agriculturally effective amounts of at least one environmentally friendly biological control agent and at least one insect control agent. These unexpected results are attributed to the combination of the nematicidal and/or fungicidal properties of the biological control agent and the root-mass enhancing properties of the insect control agent.

A further advantage is the synergistic increase in insecticidal and/or fungicidal activity of the agents of the invention in comparison to the respective individual active compounds, which extends beyond the sum of the activity of both individually applied active compounds. In this way an optimization of the amount of active compound applied is made possible.

It is also be regarded as advantageous that the combinations of the invention can also be used in particular with transgenic seeds whereby the plants emerging from this seed are capable of the expression of a protein directed against pests and pathogens. By treatment of such seed with the agents of the invention certain pests and pathogens can already be controlled by expression of the, for example, insecticidal protein, and it is additionally surprising that a synergistic activity supplementation occurs with the agents of the invention, which improves still further the effectiveness of the protection from pest and pathogen infestation.

The agents of the invention are suitable for the protection of seed of plant varieties of all types as already described which are used in agriculture, in greenhouses, in forestry, in garden construction or in vineyards. In particular, this concerns seed of maize, peanut, canola, rape, poppy, olive, coconut, cacao, soy cotton, beet, (e.g. sugar beet and feed beet), rice, millet, wheat, barley, oats, rye, sunflower, sugar cane or tobacco. The agents of the invention are also suitable for the treatment of the seed of fruit plants and vegetables as previously described. Particular importance is attached to the treatment of the seed of maize, soy, cotton, wheat and canola or rape. Thus, for example, the combination of number (1) is particularly suitable for the treatment of maize seed.

As already described, the treatment of transgenic seed with an agent of the invention is of particular importance. This concerns the seeds of plants which generally contain at least one heterologous gene that controls the expression of a polypeptide with special insecticidal properties. The heterologous gene in transgenic seed can originate from microorganisms such as Bacillus, Rhizobium, Pseudomonas, Serratia, Trichoderma, Clavibacter, Glomus or Gliocladium. The present invention is particularly suitable for the treatment of transgenic seed that contains at least one heterologous gene that originates from Bacillus sp. and whose gene product exhibits activity against the European corn borer and/or western corn rootworm. Particularly preferred is a heterologous gene that originates from Bacillus thuringiensis.

The bacterial spores surprisingly not only retain their nematicidal and/or fungicidal properties in the presence of a chemical insect control agent but demonstrate an enhanced ability to colonize the plant's root system. This enhanced ability leads to the amplification of their nematicidal and/or fungicidal activity and thus the result is improved vigor which, in turn, results in improved yield.

Having disclosed the subject matter of the present invention, it should be apparent that many modifications, substitutions and variations of the present invention are possible in light thereof. It is to be understood that the present invention can be practiced other than as specifically described. Such modifications, substitutions and variations are intended to be within the scope of the present application. As used in the following claims, articles such as "a", "the" and so on can connote the singular or the plural of the object following.

The surprising activity of the compositions and methods are illustrated by the following example.

### Example 1

Shemer^{™} is a commercial product containing the yeast Metschnikowia fructicola NRRL Y-30752 in a 56% WG (wettable granule) formulation. This preparation has a minimum content of Metschnikowia fructicola NRRL Y-30752 of 1.6x10¹⁰ cfu/g (cfu/ g = colony forming units per gram product).

Applications were made onto peach trees in Italy and France in July and August 2008. A composition containing tebuconazole and fluopyram 200 + 200g SC (Suspension Concentrate) was applied on three occasions at approximately 7 days intervals, BBCH81 - 85, with a Pre Harvest Interval (PHI) of 7 days. Shemer^{™} was applied on 4 occasions BBCH 81-87 with a PHI of 1 day. In a third treatment program, two applications of tebuconazole and fluopyram, BBCH 81 were followed by two applications of Shemer BBCH 85 and BBCH 87 all at 7 day intervals with a PHI of 1 day for the final Shemer^{™} application.

All products were applied by motor driven sprayers in a water volume of 400 L / ha. Tebuconazole and fluopyram was applied at 150 + 150 g ai / ha. Shemer^{™} was applied at 0.2 % which is equivalent to 0.8 kg/ha. Shemer has a minimum amount of active ingredient of 1.6x10¹⁰ cfu/g, therefore a minimum of 1.3 x 10¹³ cfu were applied per ha.

Assessments were carried out on fruit to determine the number of fruit infected with *Monilinia fructigena,* from a sample of 200 fruit , the result was converted to % infection per treatment and compared with an untreated plot to determine % control.

Assessments were made 9 and 13 days after final application. Shemer^{™} gave an average of 28% control of disease. Tebuconazole + fluopyram gave 75% control. The programme of two applications of Tebuconazole + fluopyram followed by two applications of Shemer gave 89% control.

## Claims

1. A composition comprising:
a) a biologically pure culture of Metschnikowia fructicola, and
b) at least one fungicide selected from:
(F1) Inhibitors of the nucleic acid synthesis, for example benalaxyl, benalaxyl-M, bupirimate, clozylacon, dimethirimol, ethirimol, furalaxyl, hymexazol, metalaxyl, metalaxyl-M, ofurace, oxadixyl and oxolinic acid;
(F2) Inhibitors of the mitosis and cell division, for example benomyl, chlorfenazole, diethofencarb, ethaboxam, fuberidazole, pencycuron, thiophanate, thiophanate-methyl and zoxamide;
(F3) Inhibitors of the respiration, for example diflumetorim as CI-respiration inhibitor; bixafen, boscalid, carboxin, fenfuram, flutolanil, fluopyram, furametpyr, furmecyclox, isopyrazam (9R-component), isopyrazam (9S-component), mepronil, oxycarboxin, penthiopyrad, thifluzamide as CII-respiration inhibitor; amisulbrom, azoxystrobin, cyazofamid, dimoxystrobin, enestroburin, famoxadone, fenamidone, fluoxastrobin, kresoxim-methyl, metominostrobin, orysastrobin, picoxystrobin, pyraclostrobin, pyribencarb, trifloxystrobin as CIII-respiration inhibitor;
(F4) Compounds capable to act as an uncoupler, like for example binapacryl, dinocap, fluazinam and meptyldinocap;
(F5) Inhibitors of the ATP production, for example fentin acetate, fentin chloride, fentin hydroxide, and silthiofam;
(F6) Inhibitors of the amino acid and/or protein biosynthesis, for example andoprim, blasticidin-S, kasugamycin, kasugamycin hydrochloride hydrate, mepanipyrim and;
(F7) Inhibitors of the signal transduction, for example fenpiclonil, and quinoxyfen;
(F8) Inhibitors of the lipid and membrane synthesis, for example biphenyl, chlozolinate, edifenphos, etridiazole, iodocarb, iprobenfos, isoprothiolane, procymidone, propamocarb, propamocarb hydrochloride, pyrazophos, tolclofos-methyl and vinclozolin;
(F9) Inhibitors of the ergosterol biosynthesis, for example aldimorph, azaconazole, bitertanol, bromuconazole, cyproconazole, diclobutrazole, difenoconazole, diniconazole, diniconazole-M, dodemorph, dodemorph acetate, epoxiconazole, etaconazole, fenarimol, fenbuconazole, fenhexamid, fenpropidin, fenpropimorph, fluquinconazole, flurprimidol, flusilazole, flutriafol, furconazole, furconazole-cis, hexaconazole, imibenconazole, ipconazole, metconazole, myclobutanil, naftifine, nuarimol, oxpoconazole, paclobutrazol, pefurazoate, penconazole, piperalin, prochloraz, propiconazole, prothioconazole, pyributicarb, pyrifenox, quinconazole, simeconazole, spiroxamine, tebuconazole, terbinafine, tetraconazole, triadimefon, triadimenol, tridemorph, triflumizole, triforine, triticonazole, uniconazole, viniconazole and voriconazole;
(F10) Inhibitors of the cell wall synthesis, for example benthiavalicarb, dimethomorph, flumorph, iprovalicarb, mandipropamid, polyoxins, polyoxorim, prothiocarb, validamycin A, and valiphenal;
(F11) Inhibitors of the melanine biosynthesis, for example carpropamid, diclocymet, fenoxanil, phthalide, pyroquilon and tricyclazole;
(F12) Compounds capable to induce a host defence, like for example acibenzolar-S-methyl, probenazole, and tiadinil;
(F13) Compounds capable to have a multisite action, like for example bordeaux mixture, captafol, captan, chlorothalonil, copper naphthenate, copper oxide, copper oxychloride, copper preparations such as copper hydroxide, copper sulphate, dichlofluanid, dithianon, dodine, dodine free base, ferbam, fluorofolpet, folpet, guazatine, guazatine acetate, iminoctadine, iminoctadine albesilate, iminoctadine triacetate, mancopper, mancozeb, maneb, metiram, metiram zinc, oxine-copper, propamidine, propineb, sulphur and sulphur preparations including calcium polysulphide, thiram, tolylfluanid, zineb and ziram;
(F14) Further compounds like for example 2,3-dibutyl-6-chlorothieno[2,3-d]pyrimidin-4(3H)-one, ethyl (2Z)-3-amino-2-cyano-3-phenylprop-2-enoate, pyflufen (N-[2-(1,3-dimethylbutyl)phenyl]-5-fluoro-1,3-dimethyl-1H-pyrazole-4-carboxamide), N-{2-[1,1'-bi(cyclopropyl)-2-yl]phenyl}-3-(difluoromethyl)-1-methyl-1H-pyrazole-4-carboxamide, 3-(difluoromethyl)-1-methyl-N-(3',4',5'-trifluorobiphenyl-2-yl)-1H-pyrazole-4-carboxamide, 3-(difluoromethyl)-N-[4-fluoro-2-(1,1,2,3,3,3-hexafluoropropoxy)phenyl]-1-methyl-1H-pyrazole-4-carboxamide, (2E)-2-(2-{[6-(3-chloro-2-methylphenoxy)-5-fluoropyrimidin-4-yl]oxy}phenyl)-2-(methoxyimino)-N-methylethanamide, (2E)-2-{2-[({[(2E,3E)-4-(2,6-dichlorophenyl)but-3-en-2-ylidene]amino}-oxy)methyl]phenyl}-2-(methoxyimino)-N-methylethanamide, 2-chloro-N-(1,1,3-trimethyl-2,3-dihydro-1H-inden-4-yl)pyridine-3-carboxamide, N-(3-ethyl-3,5,5-trimethylcyclohexyl)-3-(formylamino)-2-hydroxybenzamide, 5-methoxy-2-methyl-4-(2-{[({(1E)-1-[3-(trifluoromethyl) phenyl]ethylidene} amino)oxy]methyl}phenyl)-2,4-dihydro-3H-1,2,4-triazol-3-one, (2E)-2-(methoxyimino)-N-methyl-2-(2-{[({(1E)-1-[3-(trifluoromethyl)phenyl]ethylidene}amino)oxy]methyl}phenyl)ethanamide, (2E)-2-(methoxyimino)-N-methyl-2-{2-[(E)-({1-[3(trifluoromethyl)phenyl]ethoxy}imino) methyl]phenyl}ethanamide, (2E)-2-{2-[({[(1E)-1-(3-{[(E)-1-fluoro-2-phenylethenyl]oxy}phenyl)ethylidene]amino}oxy)methyl]phenyl}-2-(methoxyimino)-N-methylethanamide, 1-(4-chlorophenyl)-2-(1H-1,2,4-triazol-1-yl)cycloheptanol, methyl 1-(2,2-dimethyl-2,3-dihydro-1H-inden-1-yl)-1H-imidazole-5-carboxylate, N-ethyl-N-methyl-N'-{2-methyl-5-(trifluoromethyl)-4-[3-(trimethylsilyl)propoxy]phenyl}imidoformamide, N'-{5-(difluoromethyl)-2-methyl-4-[3-(trimethylsilyl)propoxy]phenyl}-N-ethyl-N-methylimidoformamide, O-{1-[(4-methoxyphenoxy)methyl]-2,2-dimethylpropyl} 1H-imidazole-1-carbothioate, N-[2-(4-{[3-(4-chlorophenyl)prop-2-yn-1-yl]oxy}-3-methoxyphenyl)ethyl]-N2-(methylsulfonyl)valinamide, 5-chloro-7-(4-methylpiperidin-1-yl)-6-(2,4,6-trifluorophenyl)[1,2,4]triazolo[1,5-a]pyrimidine, 5-amino-1,3,4-thiadiazole-2-thiol, propamocarb-fosetyl, 1-[(4-methoxyphenoxy)methyl]-2,2-dimethylpropyl 1H-imidazole-1-carboxylate, 1-methyl-N-[2-(1,1,2,2-tetrafluoroethoxy)phenyl]-3-(triiluoromethyl)-1H-pyrazole-4-carboxamide, 2,3,5,6-tetrachloro-4-(methylsulfonyl)pyridine, 2-butoxy-6-iodo-3-propyl-4H-chromen-4-one, 2-phenylphenol and salts, 3-(difluoromethyl)-1-methyl-N-[2-(1,1,2,2-tetrafluoroethoxy)phenyl]-1H-pyrazole-4-carboxamide, 3,4,5-trichloropyridine-2,6-dicarbonitrile, 3-[5-(4-chlorophenyl)-2,3-dimethylisoxazolidin-3-yl]pyridine, 3-chloro-5-(4-chlorophenyl)-4-(2,6-difluorophenyl)-6-methylpyridazine, 4-(4-chlorophenyl)-5-(2,6-difluorophenyl)-3,6-dimethylpyridazine, quinolin-8-ol, quinolin-8-ol sulfate (2:1) (salt), 5-methyl-6-octyl-3,7-dihydro[1,2,4]triazolo[1,5-a]pyrimidin-7-amine, 5-ethyl-6-octyl-3,7-dihydro[1,2,4]triazolo[1,5-a]pyrimidin-7-amine, benthiazole, bethoxazin, capsimycin, carvone, chinomethionat, chloroneb, cufraneb, cyflufenamid, cymoxanil, cyprosulfamide, dazomet, debacarb, dichlorophen, diclomezine, dicloran, difenzoquat, difenzoquat methylsulphate, diphenylamine, ecomate, ferimzone, flumetover, fluopicolide, fluoroimide, flusulfamide, flutianil, fosetyl-aluminium, fosetyl-calcium, fosetyl-sodium, hexachlorobenzene, irumamycin, isotianil, methasulfocarb, methyl (2E)-2-{2-[({cyclopropyl[(4-methoxyphenyl)imino]methyl}thio)methyl]phenyl}-3-methoxyacrylate, methyl isothiocyanate, metrafenone, (5-bromo-2-methoxy-4-methylpyridin-3-yl)(2,3,4-trimethoxy-6-methylphenyl)-methanone, mildiomycin, tolnifanide, N-(4-chlorobenzyl)-3-[3-methoxy-4-(prop-2-yn-l-yloxy)phenyl]propanamide, N-[(4-chlorophenyl)(cyano)methyl]-3-[3-methoxy-4-(prop-2-yn-1-yloxy)phenyl]propanemide, N-[(5-bromo-3-chloropyridin-2-yl)methyl]-2,4-dichloropyridine-3-carboxamide, N-[1-(5-bromo-3-chloropyridin-2-yl)ethyl]-2,4-dichloropyridine-3-carboxamide, N-[1-(5-bromo-3-chloropyridin-2-yl)ethyl]-2-fluoro-4-iodopyridine-3-carboxamide, N-{(Z)-[(cyclopropylmethoxy)imino][6-(difluoromethoxy)-2,3-difluorophenyl]methyl}-2-phenylacetamide, N-{(E)-[(cyclopropylmethoxy)imino][6-(difluoromethoxy)-2,3-difluorophenyl]methyl}-2-phenylacetamide, natamycin, nickel dimethyldithiocarbamate, nitrothal-isopropyl, octhilinone, oxamocarb, oxyfenthiin, pentachlorophenol and salts, phenazine-1-carboxylic acid, phenothrin, phosphorous acid and its salts, propamocarb fosetylate, propanosine-sodium, proquinazid, pyrrolnitrine, quintozene, S-prop-2-en-1-yl 5-amino-2-(1-methylethyl)-4-(2-methylphenyl)-3-oxo-2,3-dihydro-1H-pyrazole-1-carbothioate, tecloftalam, tecnazene, triazoxide, trichlamide, 5-chloro-N'-phenyl-N'-prop-2-yn-1-ylthiophene-2-sulfonohydrazide and zarilamid.

2. A composition according to claim 1, wherein component a) is a biologically pure culture of Metschnikowia fructicola strain NRRL Y-30752 or a mutant thereof.

3. Acomposition according to claim 1 or 2, wherein the fungicide is selected from:
metalaxyl, metalaxyl-M, boscalid, fluopyram, bixafen, penthiopyrad, azoxystrobin, famoxadone, fenamidone, kresoxim-methyl, pyraclostrobin, trifloxystrobin.

4. Acomposition according to claim 1 or 2, wherein the fungicide is selected from:
metalaxyl, fluopyram, trifloxystrobin

5. Use of a composition according to any of claims 1 to 4 for combating unwanted microorganisms on plants or plant parts.

6. Use of a composition according to any of claims 1 to 4 for combating animal pests on plants or plant parts.

7. Use of a composition according to any of claims 1 to 4 for combating unwanted microorganisms on plants or plant parts, wherein the unwanted microorganism is selcted from: Botrytis cinerea, Aspergillus niger, Penicillium digitatum, Penicillium expansum, Geotrichum candidum, Rhizopus stolonifer, Fusariurn spp and Molinilia spp.

8. Method for protection of plants or plant parts against unwanted microorganisms, comprising the steps steps:
a) treatment of the plant or plant part with a chemical fungicide, and
b) treatment of the plant or plant part with a yeast,
wherein step a) is conducted 60 to 7 days before harvest for stone fruit and strawberries or 100 to 14 days before harvest for pome; and step b) is conducted 14 to 1 day before harvest.
